# EUROPÄISCHE PATENTSCHRIFT

(11) **EP 0 601 973 B1**
(45) Veröffentlichungstag und Bekanntmachung des Hinweises auf die Patenterteilung: **13.10.1999**
(21) Anmeldenummer: 93810823.0
(22) Anmeldetag: 25.11.1993
(51) Int. Cl.: C07F 9/59, C08K 5/529

(54) **Oligomere HALS-Phosphite und HALS-Phosphonite als Stabilisatoren**
Oligomeric HALS-phosphite and HALS-phosphonites as stabilizers
HALS phosphites et HALS phosphonites comme stabilisateurs

(30) Priorität: 04.12.1992 CH 372292
(43) Veröffentlichungstag der Anmeldung: 15.06.1994
(73) Patentinhaber: Ciba Specialty Chemicals Holding Inc., 4057 Basel (CH)
(72) Erfinder: Pitteloud, Rita, Dr., CH-1724 Praroman (CH)

(56) Entgegenhaltungen:
- EP-A- 0 511 156
- DD-A- 290 906
- FR-A- 2 335 519
- US-A- 4 136 083

## Beschreibung

Die vorliegende Erfindung betrifft neue oligomere HALS-Phosphite und HALS-Phosphonite, Zusammensetzungen, enthaltend ein organisches Material, bevorzugt ein Polymer, und die neuen oligomeren HALS-Phosphite und HALS-Phosphonite, sowie die Verwendung derselben zum Stabilisieren von organischen Materialien gegen oxidativen, thermischen oder lichtinduzierten Abbau.

Organische Phosphite sind in der Technik als Costabilisatoren, sekundäre Antioxidantien und Verarbeitungsstabilisatoren, unter anderem für Polyolefine, bekannt; Beispiele für solche bekannten Phosphitstabilisatoren finden sich in R. Gächter/H. Müller (Ed.), Plastics Additives Handbook, 3rd Ed., p. 47, Hanser, München 1990, und EP-A-356 688.

Gehinderte Amine, darunter insbesondere Verbindungen enthaltend 2,2,6,6-Tetramethylpiperidylgruppen, finden bevorzugt Einsatz als Lichtschutzmittel (hindered amine light stabilizers; HALS).

Phosphite oder Phosphonite mit HALS-Strukturelementen wurden beispielsweise von W.D. Habicher et al, J. prakt. Chem. 334, 333-349 (1992) und in GB-A-2 247 241 beschrieben.

Es besteht weiterhin ein Bedarf an wirksamen Stabilisatoren für organische Materialien, die gegen oxidativen, thermischen und/oder lichtinduzierten Abbau empfindlich sind.

Es wurde nun gefunden, dass eine ausgewählte Gruppe solcher HALS-Phosphite und HALS-Phosphonite sich besonders gut als Stabilisatoren für organische Materialien, die gegen oxidativen, thermischen oder lichtinduzierten Abbau empfindlich sind, eignen. Insbesondere hervorzuheben ist die Eignung der genannten Verbindungen als Verarbeitungsstabilisatoren für synthetische Polymere.

Die vorliegende Erfindung betrifft daher oligomere Verbindungen der Formel I 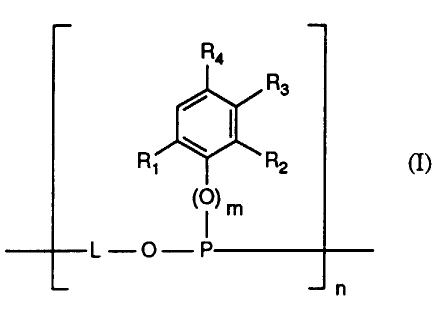 worin L eine Gruppe der Formel 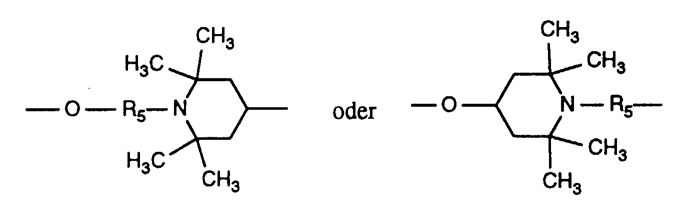 bedeutet, wobei der Sauerstoff in der Gruppe L jeweils an den Phosphor in der wiederkehrenden Struktureinheit und der Rest R₅ beziehungsweise der Kohlenstoff in 4-Stellung des Piperidinylrings in der Gruppe L jeweils an den Sauerstoff in der wiederkehrenden Struktureinheit gebunden ist;
R₁ und R₂ unabhängig voneinander Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl oder -CH₂-S-R₆ darstellen,
R₃ Wasserstoff oder Methyl ist,
R₄ Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl, -CH₂-S-₆ , (CH₂)ₚCOOR₇ oder (CH₂)_{q}OR₈ bedeutet,
R₅ C₁-C₁₈-Alkylen, durch Sauerstoff, Schwefel oder 〉N-R₉ unterbrochenes C₂-C₁₈-Alkylen; C₄-C₈-Alkenylen oder Phenylethylen darstellt,
R₆ C₁-C₁₈-Alkyl, unsubstituiertes oder durch C₁-C₄-Alkyl substituiertes C₅-C₁₂-Cycloalkyl, unsubstituiertes oder durch C₁-C₄-Alkyl substituiertes Phenyl; C₇-C₉-Phenylalkyl oder -(CH₂)ᵣCOOR₇ bedeutet,
R₇ C₁-C₁₈-Alkyl, unsubstituiertes oder durch C₁-C₄-Alkyl substituiertes C₅-C₁₂-Cycloalkyl, unsubstituiertes oder durch C₁-C₄-Alkyl substituiertes Phenyl; oder C₇-C₉-Phenylalkyl darstellt,
R₈ C₁-C₂₅-Alkyl, unsubstituiertes oder durch C₁-C₄-Alkyl substituiertes Phenyl; C₇-C₉-Phenylalkyl, C₁-C₂₅-Alkanoyl, C₃-C₂₅-Alkenoyl, durch Sauerstoff, Schwefel oder 〉N-R₉ unterbrochenes C₂-C₂₅-Alkanoyl; C₆-C₉-Cycloalkylcarbonyl, unsubstituiertes oder durch C₁-C₁₂-Alkyl substituiertes Benzoyl; Thenoyl oder Furoyl bedeutet,
R₉ Wasserstoff oder C₁-C₈-Alkyl darstellt,
m 0 oder 1 ist,
n eine ganze Zahl von 2 bis 50 darstellt,
p 0, 1 oder 2 ist,
q eine ganze Zahl von 3 bis 8 bedeutet und
r 1 oder 2 darstellt, wobei in den wiederkehrenden Struktureinheiten der Formel I die Reste L, R₁, R₂, R₃, R₄, R₅, R₆, R₇, R₈ und R₉ sowie die Ziffern m, p, q und r gleich oder verschieden sind.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3, 5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₁, R₂, R₄ und R₇ ist beispielweise C₁-C₁₈-Alkyl. Eine besonders bevorzugte Bedeutung von R₁, R₂, R₄ und R₇ als Alkyl ist C₁-C₄-Alkyl. Eine speziell bevorzugte Bedeutung von R₁, R₂ und R₄ als Alkyl ist tert-Butyl. Eine besonders bevorzugte Bedeutung von R₇ als Alkyl ist Methyl.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 3 bis 18, insbesondere 3 bis 12, z.B. 3 bis 6, vor allem 3 bis 4 Kohlenstoffatomen.

Unsubstituiertes oder durch C₁-C₄-Alkyl substituiertes C₅-C₈-Cycloalkyl, insbesondere C₅-C₆-Cycloalkyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl oder Cyclooctyl. Bevorzugt ist Cyclohexyl und tert-Butylcyclohexyl.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl oder 2,6-Diethylphenyl.

Unsubstituiertes oder durch C₁-C₄-Alkyl substituiertes C₅-C₈-Cycloalkenyl, das vorzugsweise 1 bis 3, insbesondere 1 oder 2 verzweigte oder unverzweigte Alkylgruppen-Reste enthält, bedeutet beispielsweise Cyclopentenyl, Methylcyclopentenyl, Dimethylcyclopentenyl, Cyclohexenyl, Methylcyclohexenyl, Dimethylcyclohexenyl, Trimethylcyclohexenyl, tert-Butylcyclohexenyl, Cycloheptenyl oder Cyclooctenyl. Bevorzugt ist Cyclohexenyl und tert-Butylcyclohexenyl.

C₇-C₉-Phenylalkyl bedeutet beispielsweise Benzyl, α-Methylbenzyl, α,α-Dimethylbenzyl oder 2-Phenylethyl. Benzyl ist bevorzugt.

C₁-C₁₈-Alkylen bedeutet einen verzweigten oder unverzweigten Rest wie beispielsweise Methylen, Ethylen, Propylen, Tetramethylen, Pentamethylen, Hexamethylen, Heptamethylen, Octamethylen, Decamethylen, Dodecamethylen oder Octadecamethylen. Bevorzugt ist C₁-C₈-Alkylen. Eine bevorzugte Bedeutung von R₅ ist Ethylen und Propylen.

Durch Sauerstoff, Schwefel oder 〉N-R₉ unterbrochenes C₂-C₁₈-Alkylen bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- oder -CH₂CH₂-S-CH₂CH₂-.

Ist R₅ C₄-C₈-Alkenylen, so handelt es sich beispielsweise um 2-Butenylen-1,4.

Unsubstituiertes oder durch C₁-C₄-Alkyl substituiertes C₅-C₁₂-Cycloalkyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl oder Cyclodecyl. Bevorzugt ist Cyclohexyl und tert-Butylcyclohexyl.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Bevorzugt ist Alkanoyl mit 2 bis 18, insbesondere 2 bis 12, z.B. 2 bis 6 Kohlenstoffatomen.

Alkenoyl mit 3 bis 25 Kohlenstoffatomen bedeutet einen verzweigten oder unverzweigten Rest wie beispielsweise Propenoyl, 2-Butenoyl, 3-Butenoyl, Isobutenoyl, n-2,4-Pentadienoyl, 3-Methyl-2-butenoyl, n-2-Octenoyl, n-2-Dodecenoyl, iso-Dodecenoyl, Oleoyl, n-2-Octadecenoyl oder n-4-Octadecenoyl. Bevorzugt ist Alkenoyl mit 3 bis 18, insbesondere 2 bis 12, z.B. 2 bis 6 Kohlenstoffatomen.

Durch Sauerstoff, Schwefel oder 〉N-R₉ unterbrochenes C₂-C₂₅-Alkanoyl, insbesondere C₃-C₂₅-Alkanoyl,bedeutet beispielsweise CH₃OCO-, CH₃-O-CH₂CO-, CH₃-S-CH₂CO-, CH₃-NH-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂CO- oder CH₃-(O-CH₂CH₂-)₄O-CH₂CO-.

C₆-C₉-Cycloalkylcarbonyl bedeutet beispielsweise Cyclopentylcarbonyl, Cyclohexylcarbonyl, Cycloheptylcarbonyl oder Cyclooctylcarbonyl. Cyclohexylcarbonyl ist bevorzugt.

Durch C₁-C₁₂-Alkyl substituiertes Benzoyl das vorzugsweise 1 bis 3, insbesondere 1 oder 2 Alkylgruppen enthält, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Di-tert-butylbenzoyl.

Bevorzugt sind die oligomeren Verbindungen der Formel I, worin
R₁ und R₂ unabhängig voneinander Wasserstoff, C₁-C₁₈-Alkyl, C₂-C₁₈-Alkenyl, C₅-C₈-Cycloalkyl, unsubstituiertes oder durch C₁-C₄-Alkyl substituiertes Phenyl; C₅-C₈-Cycloalkenyl, C₇-C₉-Phenylalkyl oder -CH₂-S-R₆ darstellen,
R₄ Wasserstoff, C₁-C₁₈-Alkyl, C₂-C₁₈-Alkenyl, C₅-C₈-Cycloalkyl, unsubstituiertes oder durch C₁-C₄-Alkyl substituiertes Phenyl; C₅-C₈-Cycloalkenyl, C₇-C₉-Phenylalkyl, -CH₂-S-R₆, -(CH₂)ₚCOOR₇ oder (CH₂)_{q}OR₈ bedeutet,
R₅ C₁-C₁₂-Alkylen, C₄-C₈-Alkenylen oder Phenylethylen darstellt,
R₆ C₁-C₁₈-Alkyl, C₅-C₁₂-Cycloalkyl, unsubstituiertes oder durch C₁-C₄-Alkyl substituiertes Phenyl; C₇-C₉-Phenylalkyl oder -(CH₂)ᵣCOOR₇ bedeutet,
R₇ C₁-C₁₈-Alkyl, C₅-C₁₂-Cycloalkyl, unsubstituiertes oder durch C₁-C₄-Alkyl substituiertes Phenyl; oder C₇-C₉-Phenylalkyl darstellt,
R₈ C₁-C₁₈-Alkyl, unsubstituiertes oder durch C₁-C₄-Alkyl substituiertes Phenyl; C₇-C₉-Phenylalkyl, C₁-C₁₈-Alkanoyl, C₃-C₁₈-Alkenoyl, durch Sauerstoff, Schwefel oder 〉N-R₉ unterbrochenes C₂-C₁₈-Alkanoyl; C₆-C₉-Cycloalkylcarbonyl, unsubstituiertes oder durch C₁-C₄-Alkyl substituiertes Benzoyl bedeutet,
R₉ Wasserstoff oder C₁-C₄-Alkyl darstellt und
n eine ganze Zahl von 2 bis 40 bedeutet.

Bevorzugt sind sind auch die oligomeren Verbindungen der Formel I, worin Rs Ethylen oder Propylen ist.

Ebenfalls bevorzugt sind die oligomeren Verbindungen der Formel I, worin
R₁ und R₂ unabhängig voneinander Wasserstoff oder C₁-C₄-Alkyl bedeuten, und
R₅ Ethylen oder Propylen ist.

Besonders bevorzugt sind die oligomeren Verbindungen der Formel I, worin
R₁ und R₂ unabhängig voneinander Wasserstoff, C₁-C₁₂-Alkyl, C₂-C₁₂-Alkenyl, Cyclohexyl, Phenyl oder Cyclohexenyl darstellen,
R₄ Wasserstoff, C₁-C₁₂-Alkyl, C₂-C₁₂-Alkenyl, Cyclohexyl, Phenyl, Cyclohexenyl, Benzyl, -CH₂-S-R₆, -(CH₂)ₚCOOR₇ oder (CH₂)_{q}OR₈ bedeutet,
R₅ C₁-C₈-Alkylen oder Phenylethylen darstellt,
R₆ C₁-C₁₂-Alkyl, C₅-C₈-Cycloalkyl, Phenyl, Benzyl oder -(CH₂)ᵣCOOR₇ bedeutet,
R₇ C₁-C₁₂-Alkyl, C₅-C₈-Cycloalkyl, Phenyl oder Benzyl darstellt,
R₈ C₁-C₁₂-Alkyl, Phenyl, Benzyl, C₁-C₁₂-Alkanoyl, durch Sauerstoff unterbrochenes C₂-C₁₂-Alkanoyl; Cyclohexylcarbonyl oder Benzoyl bedeutet,
n eine ganze Zahl von 2 bis 30 darstellt,
p 2 ist,
q eine ganze Zahl von 3 bis 6 bedeutet und
r 1 darstellt.

Von besonderem Interesse sind die oligomeren Verbindungen der Formel I, worin
R₁ und R₂ unabhängig voneinander Wasserstoff, C₁-C₈-A lkyl, Cyclohexyl oder Phenyl darstellen,
R₄ Wasserstoff, C₁-C₈-Alkyl, Cyclohexyl oder -(CH₂)ₚCOOR₇ bedeutet,
R₅ Ethylen, Propylen oder Phenylethylen darstellt,
R₇ C₁-C₁₂-Alkyl oder Benzyl bedeutet,
n eine ganze Zahl von 2 bis 20 darstellt und
p 2 ist.

Speziell von besonderem Interesse sind die oligomeren Verbindungen der Formel I, worin
R₁ und R₂ unabhängig voneinander Wasserstoff oder C₁-C₄-Alkyl bedeuten,
R₃ Wasserstoff ist,
R₄ Wasserstoff, C₁-C₄-Alkyl oder -(CH₂)ₚCOOR₇ darstellt,
R₅ Ethylen oder Propylen ist,
R₇ C₁-C₄-Alkyl bedeutet,
n eine ganze Zahl von 2 bis 10 darstellt und
p 2 bedeutet.

Die erfindungsgemässen oligomeren Verbindungen der Formel I können auf an sich bekannte Weise hergestellt werden.

Beispielsweise, und dies ist bevorzugt, wird eine Verbindung der Formel II oder ein Gemisch von Verbindungen der Formel II mit einer Verbindung der Formel m oder einem Gemisch von Verbindungen der Formel III, 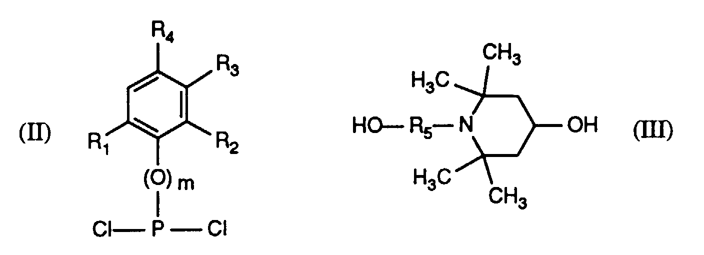 worin die Reste R₁, R₂, R₃, R₄ und R₅ sowie die Ziffer m die angegebenen Bedeutungen haben, zu den oligomeren Verbindungen der Formel I umgesetzt.

Die Umsetzung erfolgt in der Schmelze oder in Gegenwart eines geeigneten organischen, polaren oder apolaren, aprotischen Lösungsmittels. Bevorzugt geschieht diese Umsetzung in Gegenwart einer Base bei Temperaturen zwischen -20°C und dem Siedepunkt des Lösungsmittels, insbesondere bei Temperaturen zwischen 20 und 150°C.

Basen wie beispielsweise Amine können gleichzeitig auch als Lösungsmittel verwendet werden.

Die Base kann in unterschiedlichen Mengen eingesetzt werden, von katalytischen über stöchiometrische Mengen bis hin zu mehrfachem molarem Überschuß bezüglich eingesetzten Verbindungen der Formel II oder Verbindungen der Formel III. Der bei der Reaktion gebildete Chlorwasserstoff wird gegebenenfalls durch die Base in Chlorid überführt, das durch Filtration und/oder Waschen mit einer geeigneten wässrigen oder festen Phase entfernt werden kann; dabei kann auch ein zweites, nicht mit Wasser mischbares Lösungsmittel eingesetzt werden. Die Isolierung der Produkte erfolgt zweckmäßig durch Eindampfen der organischen Phase und Trocknung des Rückstandes.

Geeignete Lösungsmittel zur Durchführung der Reaktion sind u.a. Kohlenwasserstoffe (beispielsweise Mesitylen, Toluol, Xylol, Hexan, Pentan oder weitere Petroletherfraktionen), halogenierte Kohlenwasserstoffe (beispielsweise Di- oder Trichlormethan, 1,2-Dichlorethan, 1,1,1-Trichlorethan oder Chlorbenzol), Ether (z.B. Diethylether, Dibutylether oder Tetrahydrofuran), Ketone (z.B. Aceton, Ethylmethylketon, Diethylketon, Methylpropylketon oder Cyclohexanon), ferner Acetonitril, Butylacetat, Dimethylformamid, Dimethylsulfoxid oder N-Methylpyrrolidon.

Geeignete Basen sind u.a. tertiäre Amine (z.B. Trimethylamin, Triethylamin, Tributylamin, N,N-Dimethylanilin, N,N-Diethylanilin oder Pyridin), Hydride (z.B. Lithium-, Natrium-, Kaliumhydrid) oder Alkoholate (z.B. Natriummethanolat).

Werden Hydride (z.B. Natriumhydrid, Natriumborhydrid oder Lithiumaluminiumhydrid), Alkalimetalle, Alkalihydroxide oder Natriummethanolat als Basen verwendet, kann zuerst das entsprechende Alkoholat der Verbindung der Formel m gebildet werden; das gegebenenfalls dabei entstehende Reaktionsprodukt (z.B. Wasser, Methanol) wird vor der Umsetzung mit der Verbindung der Formel II abdestilliert (z.B. als Azeotrop mit Toluol).

Die strukturelle Zusammensetzung der oligomeren Verbindungen der Formel I ist abhängig von den Reaktionsbedingungen, wie beispielsweise dem Lösungsmittel oder der Reaktionstemperatur, sowie dem molaren Mengenverhältnis und der Konzentration der eingesetzten Verbindungen der Formel II und III.

Die Verbindungen der Formel II und m können in einem equimolaren Mengenverhältnis eingesetzt werden. Bevorzugt wird jedoch das HALS-Diol der Formel III in einem Ueberschuss verwendet. Bevorzugte molare Mengenverhältnisse der Verbindungen der Formel II zu III sind 1 : 1,05 bis 1 : 1,9. Besonders bevorzugt ist ein molares Mengenverhältnis von : 1,3 bis 1 : 1,8.

Die vorliegende Erfindung betrifft daher auch oligomere Produkte, erhältlich durch Umsetzung einer Verbindung der Formel II oder eines Gemisches von Verbindungen der Formel II, mit einer Verbindung der Formel III oder einem Gemisch von Verbindungen der Formel III.

Die Herstellung der Verbindungen der Formel II und III ist bekannt.

Die Arylphosphordichloridite der Formel II, worin m = 1 bedeutet, sind bekannt oder können nach an sich bekannten Verfahren wie sie beispielsweise in DE-A-3 928 291 oder von R.A. Bartlett et al, J. Amer. Chem. Soc. 109 (19), 5699 (1987) beschrieben sind, hergestellt werden.

Die Aryldichlorphosphine der Formel II, worin m = 0 bedeutet, sind ebenfalls bekannt oder können nach an sich bekannten Verfahren, wie sie beispielsweise in Org. Syntheses Coll. Vol. IV, 784 (1963) oder von Th. Weil et al, Helv. Chim. Acta 1952, 1412 oder F. Nief et al, Tetrahedron 47 (33), 6673 (1991) beschrieben sind, hergestellt werden.

Die für die Herstellung der erfindungsgemässen Verbindungen der Formel I benötigten Verbindungen der Formel II können in Analogie zu den oben erwähnten Literaturvorschriften in situ hergestellt werden und ohne Isolierung mit einer Verbindung der Formel m zu den Verbindungen der Formel I weiter umgesetzt werden.

Die HALS-Verbindungen der Formel m sind bekannt oder können nach an sich bekannten Verfahren, wie sie beispielsweise in US-A-4 233 412 beschrieben sind, hergestellt werden.

In der wiederkehrenden Struktureinheit der Formel I kann L die gleiche oder verschiedene Bedeutungen haben.

Wie in Formel IV dargestellt, 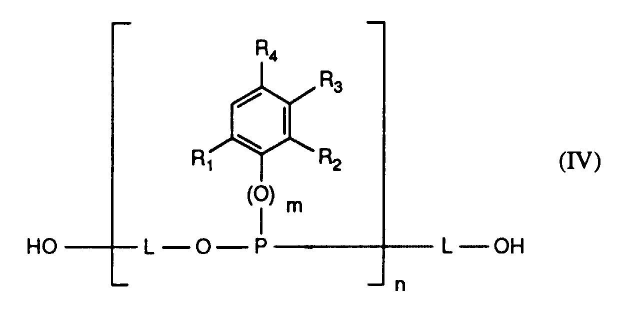 sind die Endgruppen der oligomeren Verbindungen der Formel I vorwiegend Hydroxygruppen, die bei Bedarf leicht nach bekannten Methoden derivatisiert werden können. Diese Hydroxygruppen lassen sich beispielsweise mit Säurehalogeniden, wie beispielsweise Carbonsäurehalogeniden oder Phosphorsäurehalogeniden, oder Säureanhydriden verestern; mit Alkyl- oder Benzyl-Halogeniden alkylieren bzw. benzylieren; mit Isocyanaten zu den Urethanen umsetzen; mit Isothiocyanaten zu den Thiourethanen derivatisieren; mit Sulfonylhalogeniden und beispielsweise Thionylchlorid zu den Halogeniden umsetzen; oder mit Chorphosphiten wie beispielsweise der Formel V, VI oder VII 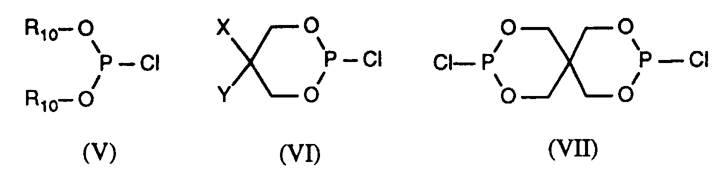 zur Reaktion gebracht werden, worin R₁₀ beispielsweise C₁-C₂₅-Alkyl, unsubstituiertes oder durch C₁-C₄-Alkyl substituiertes Phenyl; oder C₇-C₉-Phenylalkyl bedeutet, X und Y unabhängig voneinander Wasserstoff oder C₁-C₄-Alkyl bedeuten oder zusammen mit dem Kohlenstoffatom, an das sie gebunden sind, einen 3,4-Dehydrocyclohexylidenring bilden,

Die oligomeren Verbindungen der Formel I können auch als Ringsysteme gemäss Formel VIII vorliegen, 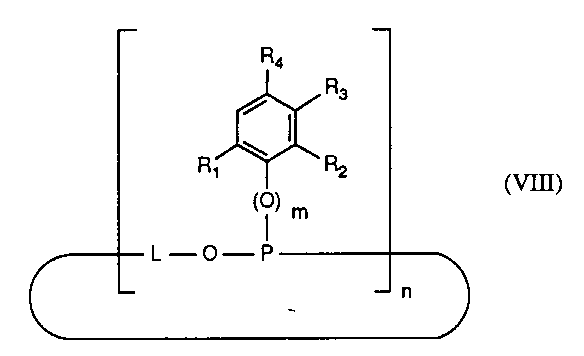 bei welchen die Hydroxy-Endgruppe in L mit dem anderen Kettenende 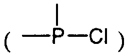 unter Salzsäureabspaltung einen Ring schliesst.

Die erfindungsgemässen Verbindungen der Formel I eignen sich zum Stabilisieren von organischen Materialien gegen oxidativen, thermischen oder lichtinduzierten Abbau.

### Beispiele für derartige Materialien sind:

1. Polymere von Mono- und Diolefinen, beispielsweise Polypropylen, Polyisobutylen, Polybuten- 1, Poly-4-methylpenten- 1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere , LLDPE/Ethylen-Vinyl- acetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere , Acrylnitril-VinylhalogenidCopolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12,4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Weitere Gegenstände der Erfindung sind daher auch Zusammensetzungen enthaltend (a) ein dem oxidativen, thermischen oder lichtinduzierten Abbau unterworfenes organisches Material und (b) mindestens eine Verbindung der Formel I.

Vorzugsweise handelt es sich bei den zu schützenden organischen Materialien um natürliche, halbsynthetische oder bevorzugt synthetische organische Materialien. Besonders bevorzugt sind thermoplastische Polymere, insbesondere PVC oder Polyolefine, vor allem Polyethylen und Polypropylen.

Besonders hervorzuheben ist die Wirkung der erfindungsgemässen Verbindungen gegen thermischen und oxidativen Abbau, vor allem bei thermischer Belastung, wie sie bei der Verarbeitung von Thermoplasten auftritt. Die erfindungsgemässen Verbindungen sind daher hervorragend als Verarbeitungsstabilisatoren einzusetzen.

Vorzugsweise werden die oligomeren Verbindungen der Formel I dem zu stabilisierenden Material in Mengen von 0,01 bis 10 %, beispielsweise 0,01 bis 5 %, vorzugsweise 0,025 bis 3 %, insbesondere 0,025 bis 1 % zugesetzt, bezogen auf das Gewicht des zu stabilisierenden organischen Materials.

Zusätzlich zu den oligomeren Verbindungen der Formel I können die erfindungsgemässen Zusammensetzungen weitere Costabilisatoren enthalten, wie beispielsweise die folgenden:
1. Antioxidantien
   1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
   1.4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
   1.6. O-,N- und S-Benzylverbindungen, z.B. 3,5,3',5'-Tetra-tert-butyl-4,4'-dihydroxy-dibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.
   1.7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
   1.8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,356-tetramethylbenzol, 2,4,6-Tris-(3,5-di-tert-butyl-4-hydroxybenzyl)-phenol.
   1.9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3 ,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin,1,3,5-Tris-(3,5-dicyclohexyl-4-hydroxybenzyl)-isocyanurat.
   1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl4-hydroxyphenyl)-propionsäure mit ein- oder mehr wertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3'5-Dicyclohexyl-4-hydroxylphenyl)-propionsäure mit ein- oder mehr wertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2,2.2]-octan.
   1.15. Ester der 3.5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxylphenyl)propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
2. UV-Absorber und Lichtschutzmittel
   2.1.2-(2'-Hydroxyphenyl)-benztriazole, wie z.B. 2-(2'-Hydroxy-5-methylphenyl)-benztriazol, 2-(3'5,-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5, -Di-tert-butyl-2'-hydroxyphenyl)-5-chlor-benztriazol, 2-(3-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)-phenyl)-benztriazol, 2-(3'-tert-Butyl-5'-[2-(2-ethylhexyloxy)-carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-butyl-5'-(2-methoxycarbonylethyl)-2'-hydroxy-phenyl]-benztriazol mit Polyethylenglycol 300; [R-CH₂CH₂-COO(CH₂)₃ 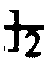 mit R = 3'-tert-Butyl-4'-hydroxy-5'-2H-benztriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy- zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl4-piperidyl)-hexamethylendiamin und 4-tert-Octylamino-2,6-dichlor-1,3,5-s-triazin, Tris(2,26,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor- 1,3,5-triazin, Kondensationsprodukt aus 2-Chlor-4'6-di-(4-n-butylamino-2'2'6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Di-octyloxy-5,5,-di-tert-butyl-oxanilid, 2,2'-Di-dodecyloxy-5,5'di-tert-butyl-oxanilid, 2-Ethoxy-2,-ethyl-oxanilid, N,N'-Bis-(3-dimethylaminopropyl)-oxalamid, 2-Ethoxy-5-tert-butyl-2-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4'6-bis(2'4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis- (benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4' -biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A-4 325 863, US-A-4 338 244 oder US-A-5 175 312 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die Costabilisatoren, mit Ausnahme der unter Punkt 11 aufgeführten Benzofuranone, werden beispielsweise in Konzentrationen von 0,01 bis 10 %, bezogen auf das Gesamtgewicht des zu stabilisierenden Materials, zugesetzt.

Weitere bevorzugte Zusammensetzungen enthalten neben der Komponente (a) und den oligomeren Verbindungen der Formel I noch weitere Additive, insbesondere phenolische Antioxidantien, Lichtschutzmittel oder/und Verarbeitungsstabilisatoren.

Besonders bevorzugte Additive sind phenolische Antioxidantien (Punkt 1 der Liste), sterisch gehinderte Amine (Punkt 2.6 der Liste), Phosphite und Phosphonite (Punkt 4. der Liste) und peroxidzerstörende Verbindungen (Punkt 5. der Liste).

Ebenfalls besonders bevorzugte zusätzliche Additive (Stabilisatoren) sind Benzofuran-2-one, wie sie z.B. in US-A-4 325 863, US-A-4 338 244 oder US-A-5 175 312, beschrieben werden.

Beispiele für solche Benzofuran-2-one sind Verbindungen der Formel 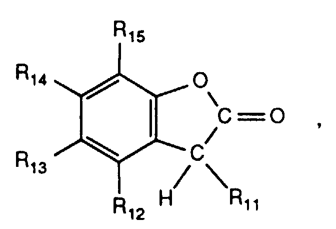 worin
R₁₁ Phenyl oder durch 1 bis 3 Alkylreste mit zusammen höchstens 18 Kohlenstoffatomen, Alkoxy mit 1 bis 12 Kohlenstoffatomen, Alkoxycarbonyl mit 2 bis 18 Kohlenstoffatomen oder Chlor substituiertes Phenyl ist; R₁₂ Wasserstoff ist;
R₁₄ Wasserstoff, Alkyl mit 1 bis 12 Kohlenstoffatomen, Cyclopentyl, Cyclohexyl oder Chlor ist;
R₁₃ die Bedeutung von R₁₂ oder R₁₄ hat oder ein Rest der Formel 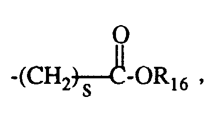 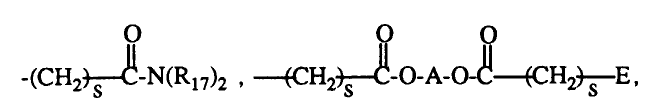 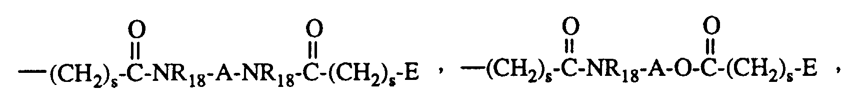 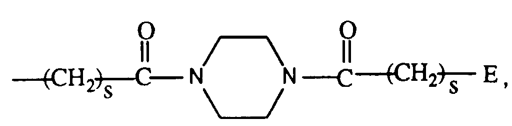 -CH₂-S-R₁₉, 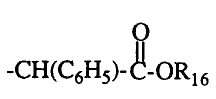 oder
-D-E ist, worin
R₁₆ Wasserstoff, Alkyl mit 1 bis 18 Kohlenstoffatomen, durch Sauerstoff oder Schwefel unterbrochenes Alkyl mit 2 bis 18 Kohlenstoffatomen, Dialkylaminoalkyl mit insgesamt 3 bis 16 Kohlenstoffatomen, Cyclopentyl, Cyclohexyl, Phenyl oder durch 1 bis 3 Alkylreste mit zusammen höchstens 18 Kohlenstoffatomen substituiertes Phenyl ist;
s 0, 1 oder 2 ist;
die Substituenten R₁₇ unabhängig voneinander Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl, ein Rest der Formel -C₂H₄OH, -C₂H₄-O-CₜH₂ₜ₊₁ oder 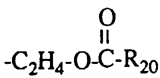 sind oder zusammen mit dem Stickstoffatom, an das sie gebunden sind, einen Piperidin- oder Morpholinrest bilden;
t 1 bis 18;
R₂₀ Wasserstoff, Alkyl mit 1 bis 22 Kohlenstoffatomen oder Cycloalkyl mit 5 bis 12 Kohlenstoffatomen;
A ein gegebenenfalls durch Stickstoff, Sauerstoff oder Schwefel unterbrochenes Alkylen mit 2 bis 22 Kohlenstoffatomen;
R₁₈ Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl oder Benzyl;
R₁₉ Alkyl mit 1 bis 18 Kohlenstoffatomen bedeutet;
D -O-, -S-, SO-, -SO₂- oder -C(R₂₁)₂- ist;
die Substituenten R₂₁ unabhängig voneinander Wasserstoff, C₁-C₁₆-Alkyl sind, wobei die beiden R₂₁ zusammen 1 bis 16 Kohlenstoffatome enthalten, R₂₁ ferner Phenyl oder einen Rest der Formel 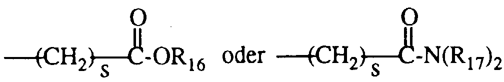 ist, worin s, R₁₆ und R₁₇ die oben angegebenen Bedeutungen haben;
E ein Rest der Formel 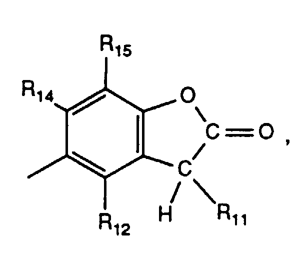 worin R₁₁, R₁₂ und R₁₄ die oben angegebenen Bedeutungen haben; und
R₁₅ Wasserstoff, Alkyl mit 1 bis 20 Kohlenstoffatomen, Cyclopentyl, Cyclohexyl, Chlor oder ein Rest der Formel 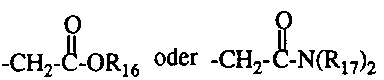 ist, worin R₁₆ und R₁₇ die oben angegebenen Bedeutungen haben, oder R₁₅ zusammen mit R₁₄ einen Tetramethylenrest bildet.

Bevorzugt sind solche Benzofuran-2-one, in denen R₁₃ Wasserstoff, Alkyl mit 1 bis 12 Kohlenstoffatomen, Cyclopentyl, Cyclohexyl, Chlor oder ein Rest der Formel 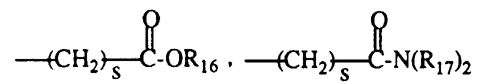 oder -D-E ist, worin s, R₁₆, R₁₇, D und E die oben angegebenen Bedeutungen haben, R₁₆ insbesondere die Bedeutung von Wasserstoff, Alkyl mit 1 bis 18 Kohlenstoffatomen, Cyclopentyl oder Cyclohexyl hat.

Bevorzugt sind weiterhin solche Benzofuran-2-one, in denen R₁₁ Phenyl oder durch 1 oder 2 Alkylreste mit zusammen höchstens 12 Kohlenstoffatomen substituiertes Phenyl ist; R₁₂ Wasserstoff; R₁₄ Wasserstoff oder Alkyl mit 1 bis 12 Kohlenstoffatomen ist; R₁₃ Wasserstoff, Alkyl mit 1 bis 12 Kohlenstoffatomen, 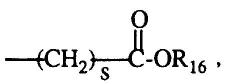 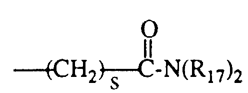 oder -D-E; R₁₅ Wasserstoff, Alkyl mit 1 bis 20 Kohlenstoffatomen, 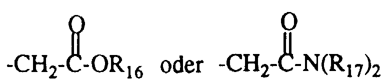 ist oder R₁₅ zusammen mit R₁₄ einen Tetramethylenrest bildet, wobei s, R₁₆, R₁₇, D und E die zu Anfang angegebenen Bedeutungen haben.

Ebenfalls von besonderem Interesse sind solche Benzofuran-2-one, in denen R₁₁ Phenyl; R₁₃ Wasserstoff, Alkyl mit 1 bis 12 Kohlenstoffatomen oder -D-E ist; R₁₂ und R₁₄ unabhängig voneinander Wasserstoff oder Alkyl mit 1 bis 4 Kohlenstoffatomen sind; und R₁₅ Alkyl mit 1 bis 20 Kohlenstoffatomen ist, wobei D und E die zu Anfang angegebenen Bedeutungen haben.

Ebenfalls von hervorgehobenem Interesse sind schließlich solche Benzofuran-2-one, in denen R₁₁ Phenyl; R₁₃ Alkyl mit 1 bis 4 Kohlenstoffatomen oder -D-E ist; R₁₂ und R₁₄ Wasserstoff sind; und R₁₅ Alkyl mit 1 bis 4 Kohlenstoffatomen, Cyclopentyl oder Cyclohexyl ist, wobei D eine Gruppe -C(R₂₁)₂- und E ein Rest der Formel 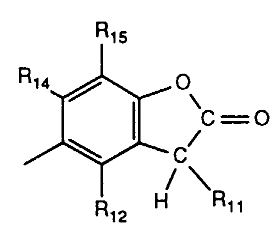 ist, wobei die Substituenten R₂₁ gleich oder verschieden voneinander sind und je Alkyl mit 1 bis 4 Kohlenstoffatomen sind, und R₁₁, R₁₂, R₁₄ und R₁₅ die angegebene Bedeutung haben.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemäßen Zusammensetzungen enthalten sein.

Die Einarbeitung der oligomeren Verbindungen der Formel I sowie gegebenenfalls weiterer Additive in das polymere, organische Material erfolgt nach bekannten Methoden, beispielsweise vor oder während der Formgebung oder auch durch Aufbringen der gelösten oder dispergierten Verbindungen auf das polymere, organische Material, gegebenenfalls unter nachträglichem Verdunsten des Lösungsmittels. Die oligomeren Verbindungen der Formel I können auch in Form eines Masterbatches, der diese beispielsweise in einer Konzentration von 2,5 bis 25 Gew.-% enthält, den zu stabilisierenden Materialien zugesetzt werden.

Die oligomeren Verbindungen der Formel I können auch vor oder während der Polymerisation oder vor der Vernetzung zugegeben werden.

Die oligomeren Verbindungen der Formel I können in reiner Form oder in Wachsen, Oelen oder Polymeren verkapselt in das zu stabilisierende Material eingearbeitet werden.

Die oligomeren Verbindungen der Formel I können auch auf das zu stabilisierende Polymer aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die oligomeren Verbindungen der Formel I, gegebenenfalls zusammen mit anderen Additiven, durch Aufsprühen zu applizieren.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt, insbesondere Polyolefine. Vor allem ist dabei die ausgezeichnete Wirksamkeit der oligomeren Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere (z.B. Elastomere) oder Schmierstoffe bzw. Hydraulikflüssigkeiten können gegen Abbau, z.B. lichtinduzierten oder thermooxidativen Abbau, stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Eine bevorzugte Ausführungsform der vorliegenden Erfindung ist daher die Verwendung von oligomeren Verbindungen der Formel I zum Stabilisieren von organischen Materialien gegen oxidativen, thermischen oder lichtinduzierten Abbau.

Die vorliegende Erfindung betrifft auch ein Verfahren zum Stabilisieren eines organischen Materials gegen oxidativen, thermischen oder lichtinduzierten Abbau, dadurch gekennzeichnet, daß man diesem mindestens eine oligomere Verbindung der Formel I einverleibt oder auf dieses aufbringt.

Die folgenden Beispiele erläutern die Erfindung weiter. Angaben in Teilen oder Prozenten beziehen sich auf das Gewicht.

### Beispiel 1: Herstellung der oligomeren Verbindung (101) (Tabelle 1).

a) Zu einer bei 50°C gehaltenen Schmelze von 52,9 g (0,24 Mol) 2,4-Di-tert-butyl-6-methyl-phenol und 580 mg (4,8 mMol) Dimethylaminopyridin werden 42,9 g (0,31 Mol) Phosphortrichlorid zugetropft. Nach ca. einer Stunde wird auf 100°C erwärmt und während 3 Stunden bei dieser Temperatur weiter gerührt. Das überschüssige Phosphortrichlorid wird am Vakuumrotationsverdampfer abdestilliert und der Rückstand am Hochvakuum destilliert. Es resultieren 70,0 g (91 %) 2,4-Di-tert-butyl-6-methylphenylphosphorodichloridit als farbloses Oel, Sdp. 95°C/ 0,03 mbar. Analyse, berechnet: C 56,09 %, H 7,22 %, Cl 22,07 %. Analyse, gefunden: C 56,37 %, H 7,20 %, Cl 21,97 %. ³¹P-NMR (145,785 MHz, CDCl₃): 162,661 ppm.
b) Zu einer unter Stickstoff-Atmosphäre gerührten Lösung von 6,73 g (21,0 mMol) 2,4-Di-tert-butyl-6-methylphenylphosphorodichloridit (Beispiel 1a) und 6,4 ml (46 mMol; 2,2 Aequivalent) Triethylamin in 5 ml Tetrahydrofuran wird bei 10°C eine Lösung von 7,19 g (36 mMol; 1,7 Aequivalent) N-2'-Hydroxyethyl-4-hydroxy-2,2,6,6-tetramethylpiperidin in 160 ml Tetrahydrofuran getropft. Anschliessend wird das Reaktionsgemisch während 3 Stunden bei einer Temperatur von 55-60°C gerührt. Die weisse Suspension wird über Celite filtriert und das Filtrat am Vakuumrotaionsverdampfer eingeengt. Der Rückstand wird in Toluol aufgenommen und erneut filtriert. Nach dem Abdampfen des Toluols am Vakuumrotationsverdampfer und Trocknung am Hochvakuum werden 10,5 g (77 %) der oligomeren Verbindung (101) (Tabelle 1), Smp. 83-86°C, erhalten.

Mit der Gelpermeationschromatographie (GPC) wird das Gewichtsmittelwerts-Molekulargewicht Mw und das Zahlenmittelwerts-Molekulargewicht Mn bestimmt.

In Analogie zu Beispiel 1b werden aus den entsprechenden Aryldichlorphosphiten und dem käuflichen Phenyldichlorphosphin die oligomeren Verbindungen (102), (103), (104) und (105) hergestellt (Tabelle 1).

### Beispiel 2: Herstellung der oligomeren Verbindung (106) (Tabelle 1).

In Analogie zu Beispiel 1b werden aus 6,73 g (21 mMol) 2,4-Di-tert-butyl-6-methylphenylphosphorodichloridit (Beispiel la) und 6,34 g (31,5 mMol; 1,5 Aequivalent) N-2'-Hydroxyethyl-4-hydroxy-2,2,6,6-tetramethylpiperidin 9,3 g (98 %) der oligomeren Verbindung (106) (Tabelle 1), Smp. 90-93°C, erhalten.

### Beispiel 3: Herstellung der oligomeren Verbindung (107) (Tabelle 1).

In Analogie zu Beispiel 1b werden aus 6,73 g (21 mMol) 2,4-Di-tert-butyl-6-methylphenylphosphorodichloridit (Beispiel la) und 5,5 g (27,3 mMol; 1,3 Aequivalent) N-2'-Hydroxyethyl-4-hydroxy-2,2,6,6-tetramethylpiperidin 8,6 g (91 %) der oligomeren Verbindung (107) (Tabelle 1), Smp. 92-96°C, erhalten.

### Beispiel 4: Herstellung der oligomeren Verbindung (108) (Tabelle 1).

In Analogie zu Beispiel 1b werden aus 6,73 g (21 mMol) 2,4-Di-tert-butyl-6-methylphenylphosphorodichloridit (Beispiel 1a) und 4,65 g (23 mMol; 1,1 Aequivalent) N-2'-Hydroxyethyl-4-hydroxy-2,2,6,6-tetramethylpiperidin 8,5 g (90 %) der oligomeren Verbindung (108) (Tabelle 1), Smp. 92-95°C, erhalten.

### Beispiel 5: Herstellung der oligomeren Verbindung (109) (Tabelle 1).

Zu einer unter Stickstoff-Atmosphäre gerührten weissen Suspension von 7,19 g (36 mMol; 1,7 Aequivalent) N-2'Hydroxyethyl-4-hydroxy-2,2,6,6-tetramethylpiperidin und 5,1 g (50 mMol; 2,5 Aequivalent) Triethylamin in 80 ml Toluol wird bei 10°C eine Lösung von 6,73 g (21 mMol) 2,4-Di-tert-butyl-6-methylphenylphosphorodichloridit (Beispiel 1a) in 10 ml Toluol getropft. Anschliessend wird das Reaktionsgemisch während 3 Stunden bei 95-100°C stark gerührt. Nach dem Abkühlen auf Raumtemperatur wird die dicke Suspension über Celite filtriert und das Filtrat am Vakuumrotationsverdampfer eingeengt. Nach Trocknung des Rückstandes am Hochvakuum werden 9,5 (75 %) der oligomeren Verbindung (109) (Tabelle 1), Smp. 95-99°C, erhalten.

In Analogie zu Beispiel 5 werden aus den entsprechenden Aryldichlor-Phosphiten bzw. -Phosphinen die oligomeren Verbindung (110), (111), (112) und (113 hergestellt (Tabelle 1).

### Beispiel 6: Herstellung der oligomeren Verbindung (114) (Tabelle 1).

Zu einer unter Stickstoff-Atmosphäre gerührten Suspension von 10,98 g (51 mMol; 1,7 Aequivalent) N-2'-Hydroxypropyl-4-hydroxy-2,2,6,6-tetramethylpiperidin und 7,59 g (75 mMol; 2,5 Aequivalent) Triethylamin in 170 ml Xylol wird bei Raumtemperatur eine Lösung von 9,64 g (30 mMol) 2,4-Di-tert-butyl-6-methylphenylphosphorodichloridit (Beispiel la) in 10 ml Xylol getropft. Anschliessend wird das Reaktionsgemisch während 5 Stunden bei 130°C gerührt. Nach dem Abkühlen auf Raumtemperatur wird das Reaktionsgemisch über Celite filtriert und das Filtrat am Vakuumrotationsverdampfer eingeengt. Nach Trocknung des Rückstandes am Hochvakuum werden 16,9 (92 %) der oligomeren Verbindung (114) (Tabelle 1), Smp. 55-72°C, erhalten.

### Beispiel 7: Herstellung der oligomeren Verbindung (115) (Tabelle 1).

a) In einen 200 ml Sulfierkolben mit Thermometer, Rührer, Rückflusskühler und Tropftrichter werden unter Stickstoff-Atmosphäre 44,07 g (0,20 Mol) 2,4-Di-tert-butyl-6-methyl-phenol, 0,49 g (4,0 mMol) Dimethylaminopyridin und 44 ml Toluol gegeben. Das Reaktionsgemisch wird auf 50°C erwärmt. Bei dieser Temperatur wird innerhalb von 20 Minuten 35,7 g (0,26 Mol; 1,3 Aequivalent) Phosphortrichlorid zugetropft. Das entstehende Salzsäure-Gas wird durch eine 10 %ige wässrige Natriumhydroxid-Lösung neutralisiert. Anschliessend wird das Reaktionsgemisch während 95 Minuten auf 105°C erwärmt und während 30 Minuten bei dieser Temperatur weiter gerührt (Ende der Salzsäure-Gas-Entwicklung). Unter leichtem Stickstoff-Strom wird während 60 Minuten bei 105°C weiter gerührt. Die Lösung wird mit 20 ml Toluol verdünnt. Der Ueberschuss and Phosphortrichlorid und ca. 20 ml Toluol wird anschliessend abdestilliert.
b) In einen 1,5 l Sulfierkolben werden unter Stickstoff-Atmosphäre 68,45 g (0,34 Mol; 1,7 Aequivalent) N-2'-Hydroxyethyl-4-hydroxy-2,2,6,6-tetramethylpiperidin, 46,5 g (0,46 Mol; 2,3 Aequivalent) Triethylamin und 1000 ml Toluol gegeben. Zu dieser Suspension wird bei Raumtemperatur innerhalb von 45 Minuten die oben (Beispiel 7a) beschriebene Lösung getropft. Anschliessend wird die dicke Suspension auf 105°C erwärmt und während 3,5 Stunden bei dieser Temperatur weiter gerührt. Das Reaktionsgemisch wird auf Raumtemperatur abgekühlt und über Celite filtriert. Das Filtrat wird am Vakuumrotationsverdampfer eingeengt. Nach Trocknung des Rückstandes am Hochvakuum werden 82,5 g (70 %) der oligomeren Verbindung (115) (Tabelle 1) als weisses Pulver, Smp. 98-99°C, erhalten.

### Beispiel 8: Herstellung der oligomeren Verbindung (116) (Tabelle 1).

a) In Analogie zu Beispiel 7a) werden aus 33,05 (0,15 Mol) 2,4-Di-tert-butyl-6-methylphenol, 17,1 ml (0,195 Mol) Phosphortrichlorid und 0,37 g (3,0 mMol) Dimethylaminopyridin in 33 ml Toluol die entsprechende Dichlorphosphit-Lösung hergestellt.
b) In einen 750 ml Sulfierkolben werden unter Stickstoff-Atmosphäre 71,3 g (0,255 Mol) N-2'-Hydroxyethyl-4-hydroxy-2,2,6,6-tetramethylpiperidin, 170 ml Triethylamin und 170 ml Toluol gegeben. Zu dieser Suspension wird bei Raumtemperatur innerhalb von 45 Minuten die oben beschriebene Lösung (Beispiel 8a) getropft. Anschliessend wird die dicke Suspension auf 100°C erwärmt und während 3,5 Stunden bei dieser Temperatur weiter gerührt. Das Reaktionsgemisch wird auf Raumtemperatur abgekühlt und über Celite filtriert. Das Filtrat wird am Vakuumrotationsverdampfer eingeengt. Nach Trocknung des Rückstandes am Hochvakuum werden 75,0 g (85 %) der oligomeren Verbindung (116) (Tabelle 1), Smp. 92-96°C, erhalten.

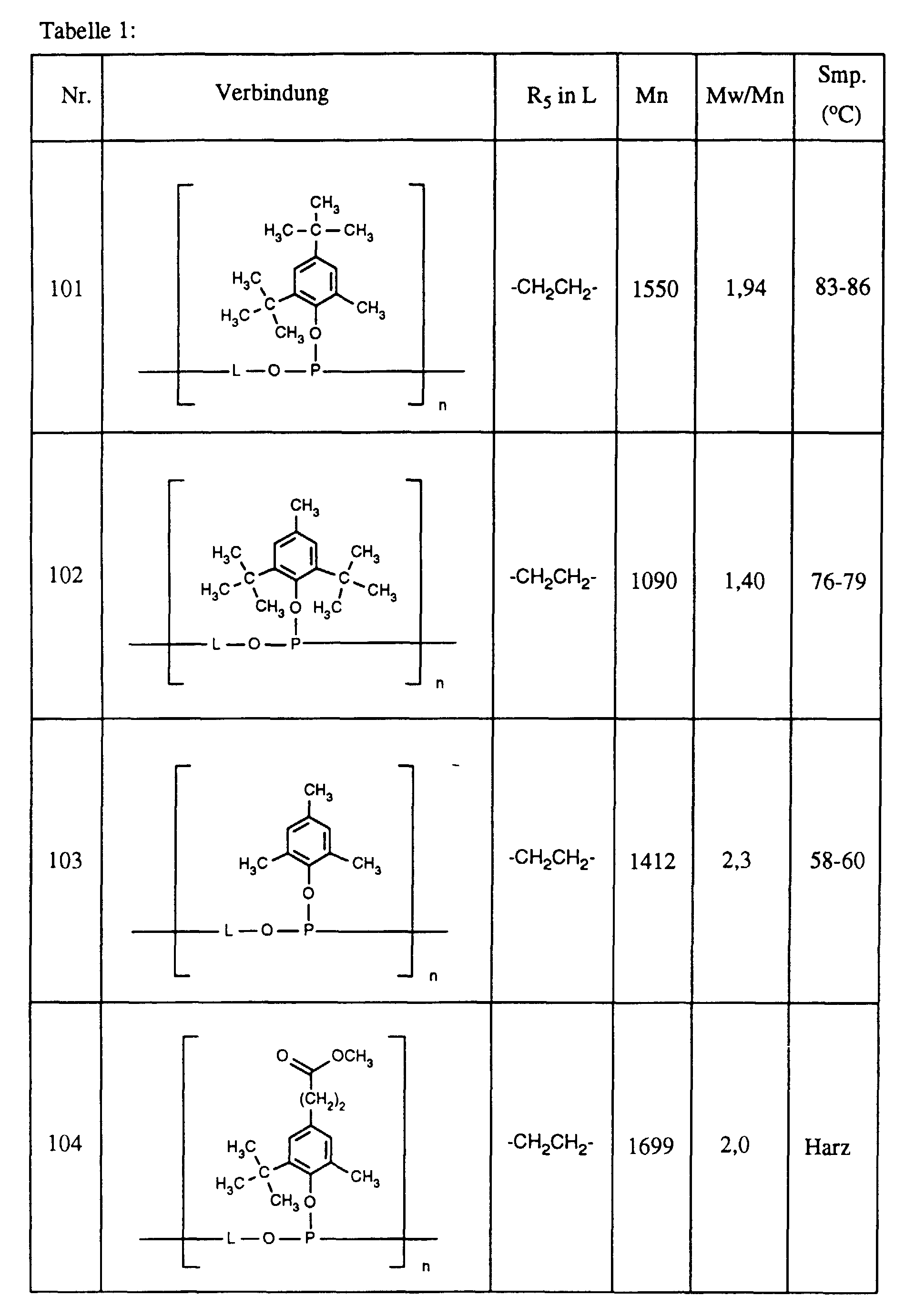

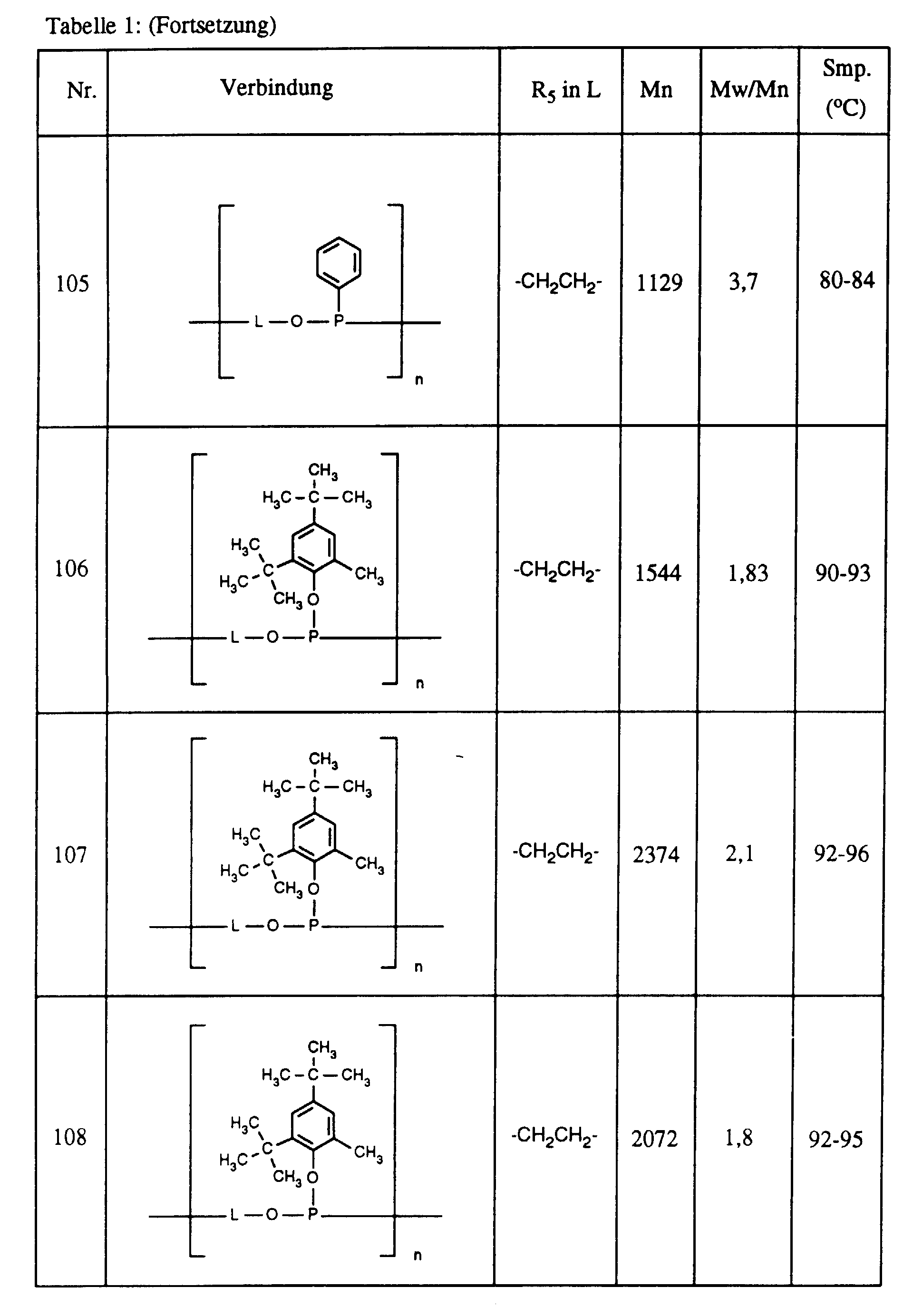

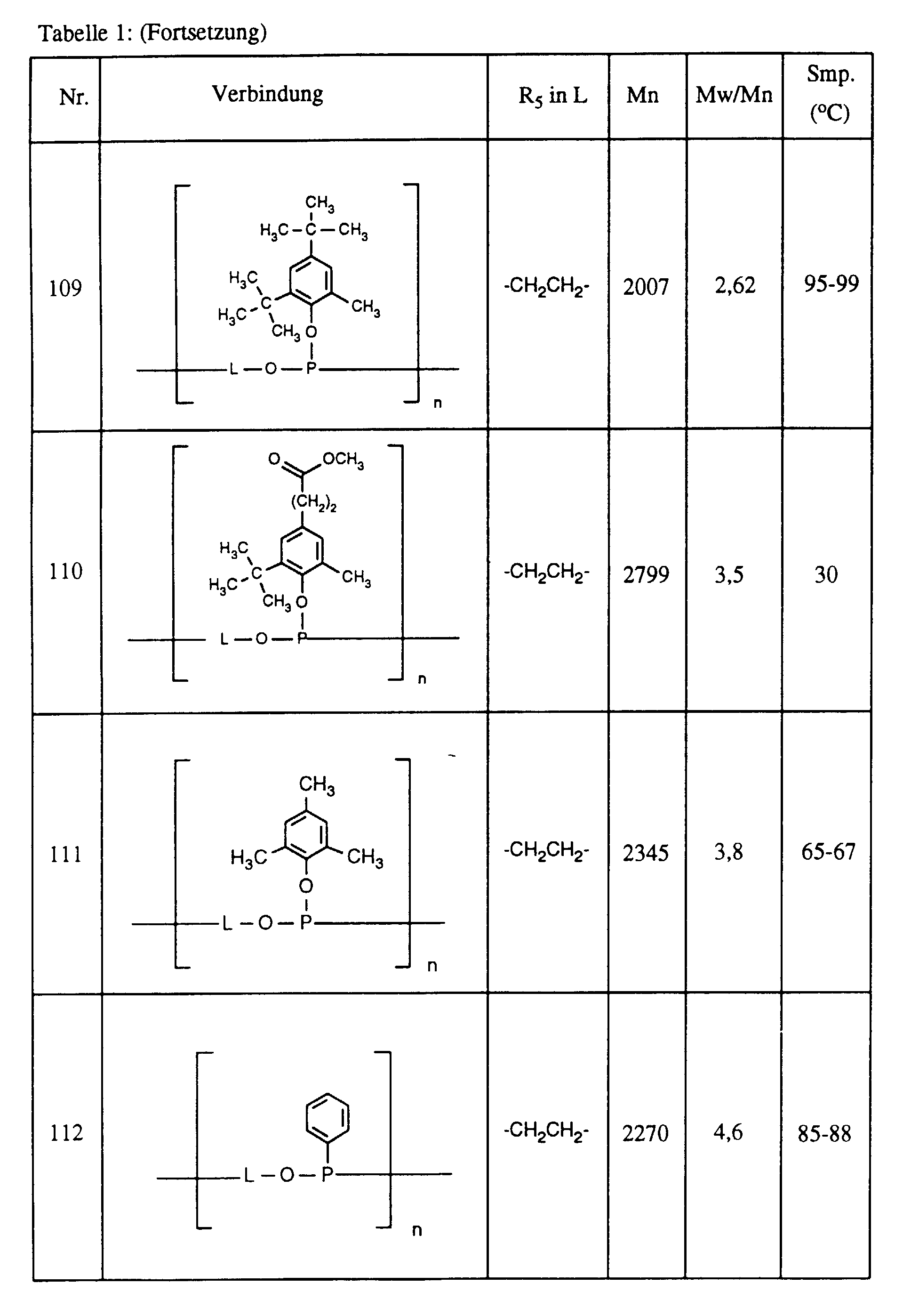

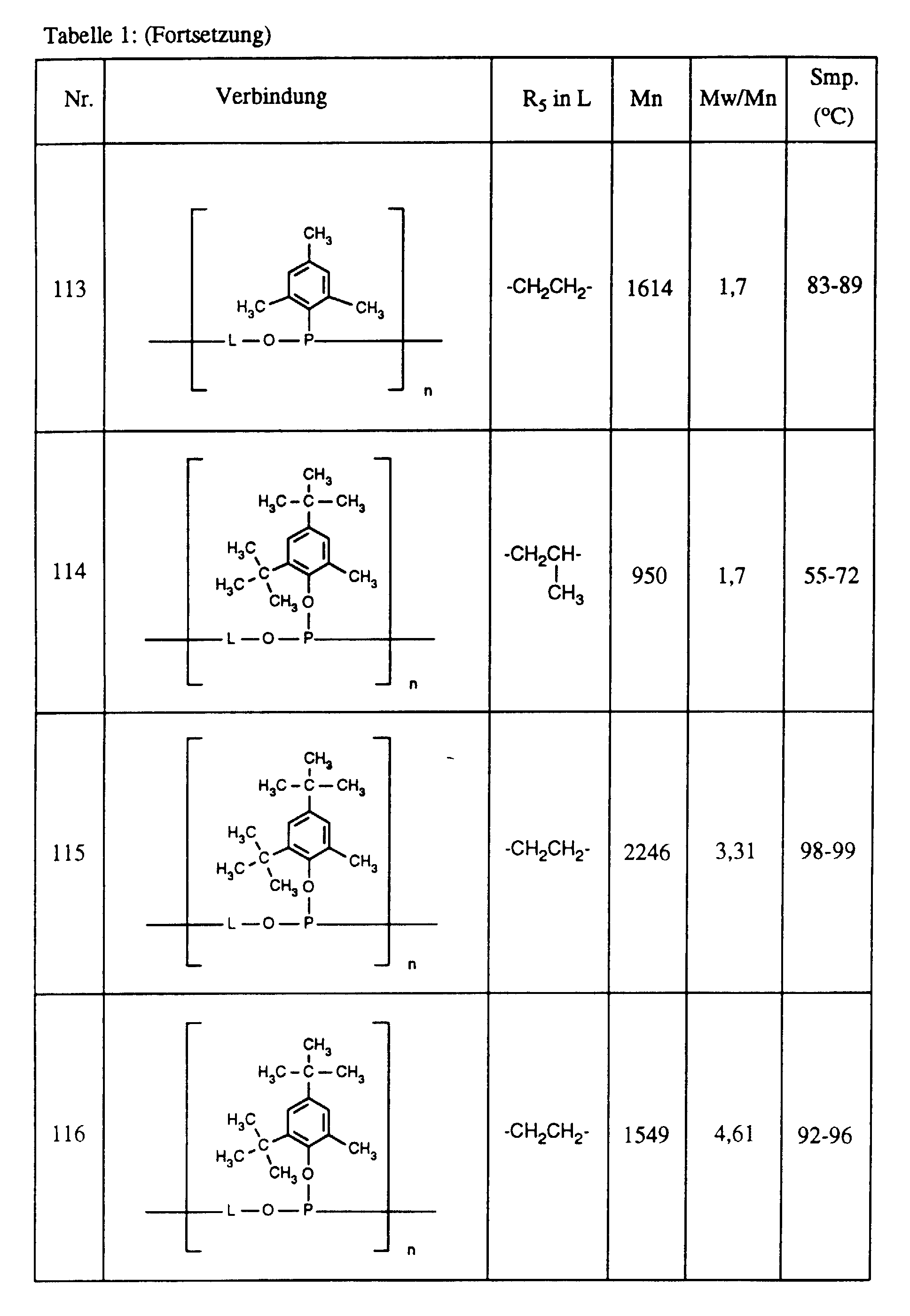

### Beispiel 9: Stabilisierung von Polypropylen bei Mehrfachextrusion.

1,3 kg Polypropylenpulver (Profax 6501), das mit 0,025 % Irganox® 1076 (3-[3,5-di-tert-butyl-4-hydroxyphenyl] propionsäure-n-octadecylester) vorstabilisiert wurde, (mit einem bei 230°C und mit 2,16 kg gemessenen Schmelzindex von 3.2) werden gemischt mit 0,05 % Irganox® 1010 (Pentaerythrityl-tetrakis-[3-(3,5-di-tert-butyl-4-hydroxyphenyl)-propionat), 0,05 % Calciumstearat, 0,03 % Dihydrotalcit [DHT 4A®, Kyowa Chemical Industry Co., Ltd., Mg_{4.5}Al₂(OH)₁₃CO₃·3,5 H₂O] und 0,05 % der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Grosse Zunahme des Schmelzindex bedeutet starken Kettenabbau, also schlechte Stabilisierung. Die Resultate sind in Tabelle 2 zusammengefasst.

**Tabelle 2:**

| Verbindung aus Tabelle 1 | Schmelzindex nach 3 Extrusionen |
|---|---|
| - | 20,0 |
| 101 | 4,8 |
| 102 | 4,6 |
| 103 | 4,9 |
| 104 | 4,8 |
| 105 | 4,5 |
| 108 | 4,8 |
| 109 | 5,0 |
| 111 | 4,9 |
| 112 | 4,3 |
| 113 | 4,6 |

### Beispiel 10: Stabilisierung von Polypropylen bei Mehrfachextrusion.

1,3 kg Polypropylenpulver (Profax 6501), das mit 0,025 % Irganox®) 1076 (3-[3,5-di-tert-butyl-4-hydroxyphenyl]propionsäure-n-octadecylester) vorstabilisiert wurde, (mit einem bei 230°C und mit 2,16 kg gemessenen Schmelzindex von 3.2) werden gemischt mit 0,05 % Irganox® 1010 (Pentaerythrityl-tetrakis-[3-(3,5-di-tert-butyl-4-hydroxyphenyl)-propionat), 0,05 % Calciumstearat, 0,03 % Dihydrotalcit [DHT 4A®, Kyowa Chemical Industry Co., Ltd., Mg_{4.5}Al₂(OH)₁₃CO₃·3,5 H₂O] und **0,025 %** der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Grosse Zunahme des Schmelzindex bedeutet starken Kettenabbau, also schlechte Stabilisierung. Die Resultate sind in Tabelle 3 zusammengefasst.

**Tabelle 3:**

| Verbindung aus Tabelle 1 | Schmelzindex nach 3 Extrusionen |
|---|---|
| - | 20,0 |
| 106 | 6,3 |
| 107 | 6,7 |
| 114 | 6,9 |
| 115 | 6,3 |
| 116 | 6,3 |

### Beispiel 11: Stabilisierung von Polyethylen während der Verarbeitung.

100 Teile Polyäthylenpulver (Lupolen®5260 Z) werden mit 0,05 Teilen Irganox® 1010 (Pentaerythrityl-tetrakis-[3-(3,5-di-tert-butyl-4-hydroxyphenyl)-propionat] und 0,1 Teilen Stabilisator aus Tabelle 1 gemischt und in einem Brabender Plastographen bei 220°C und 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments festgestellt werden kann. In der Tabelle 4 ist die Zeit bis zur merklichen Zunahme des Drehmoments als Mass der Stabilisatorwirkung angegeben.

**Tabelle 4:**

| Verbindung aus Tabelle 1 | Zeit bis zum Drehmomentanstieg (Min.) |
|---|---|
| - | 5,0 |
| 101 | 12,0 |
| 103 | 12,5 |
| 105 | 14,0 |
| 107 | 14,0 |
| 109 | 12,5 |
| 111 | 12,5 |
| 115 | 14,5 |

## Patentansprüche

1. Oligomere Verbindungen der Formel I 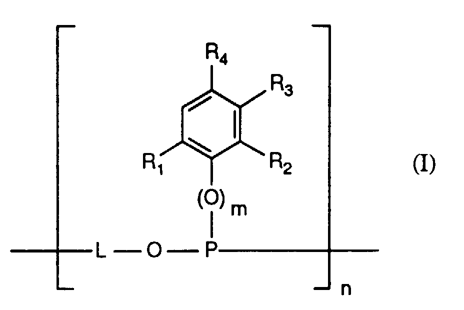 worin L eine Gruppe der Formel 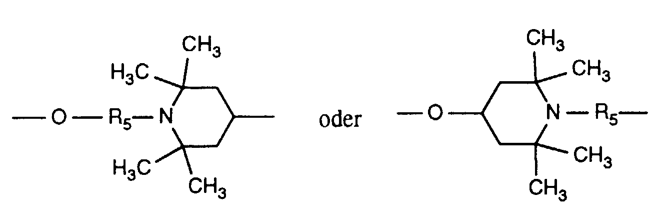 bedeutet, wobei der Sauerstoff in der Gruppe L jeweils an den Phosphor in der wiederkehrenden Struktureinheit und der Rest R₅ beziehungsweise der Kohlenstoff in 4-Stellung des Piperidinylrings in der Gruppe L jeweils an den Sauerstoff in der wiederkehrenden Struktureinheit gebunden ist;
R₁ und R₂ unabhängig voneinander Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl oder -CH₂-S-R₆ darstellen,
R₃ Wasserstoff oder Methyl ist,
R₄ Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl, -CH₂-S-R₆ , -(CH₂)ₚCOOR₇ oder -(CH₂)_{q}OR₈ bedeutet,
R₅ C₁-C₁₈-Alkylen, durch Sauerstoff, Schwefel oder 〉N-R₉ unterbrochenes C₂-C₁₈-Alkylen; C₄-C₈-Alkenylen oder Phenylethylen darstellt,
R₆ C₁-C₁₈-Alkyl, unsubstituiertes oder durch C₁-C₄-Alkyl substituiertes C₅-C₁₂-Cycloalkyl, unsubstituiertes oder durch C₁-C₄-Alkyl substituiertes Phenyl; C₇-C₉-Phenylalkyl oder -(CH₂)ᵣCOOR₇ bedeutet,
R₇ C₁-C₁₈-Alkyl, unsubstituiertes oder durch C₁-C₄-Alkyl substituiertes C₅-C₁₂-Cycloalkyl, unsubstituiertes oder durch C₁-C₄-Alkyl substituiertes Phenyl; oder C₇-C₉-Phenylalkyl darstellt,
R₈ C₁-C₂₅-Alkyl, unsubstituiertes oder durch C₁-C₄-Alkyl substituiertes Phenyl; C₇-C₉-Phenylalkyl, C₁-C₂₅-Alkanoyl, C₃-C₂₅-Alkenoyl, durch Sauerstoff, Schwefel oder 〉N-R₉ unterbrochenes C₂-C₂₅-Alkanoyl; C₆-C₉-Cycloalkylcarbonyl, unsubstituiertes oder durch C₁-C₁₂-Alkyl substituiertes Benzoyl; Thenoyl oder Furoyl bedeutet,
R₉ Wasserstoff oder C₁-C₈-Alkyl darstellt,
m 0 oder 1 ist,
n eine ganze Zahl von 2 bis 50 darstellt,
p 0, 1 oder 2 ist,
q eine ganze Zahl von 3 bis 8 bedeutet und
r 1 oder 2 darstellt, wobei in den wiederkehrenden Struktureinheiten der Formel I die Reste L, R₁, R₂, R₃, R₄, R₅, R₆, R₇, R₈ und R₉ sowie die Ziffern m, p, q und r gleich oder verschieden sind.

2. Oligomere Verbindungen gemäss Anspruch 1, worin
R₁ und R₂ unabhängig voneinander Wasserstoff, C₁-C₁₈-Alkyl, C₂-C₁₈-Alkenyl, C₅-C₈-Cycloalkyl, unsubstituiertes oder durch C₁-C₄-Alkyl substituiertes Phenyl; C₅-C₈-Cycloalkenyl, C₇-C₉-Phenylalkyl oder -CH₂-S-R₆ darstellen,
R₄ Wasserstoff, C₁-C₁₈-Alkyl, C₂-C₁₈-Alkenyl, C₅-C₈-Cycloalkyl, unsubstituiertes oder durch C₁-C₄-Alkyl substituiertes Phenyl; C₅-C₈-Cycloalkenyl, C₇-C₉-Phenylalkyl, -CH₂-S-R₆, -(CH₂)ₚCOOR₇ oder -(CH₂)_{q}OR₈ bedeutet,
R₅ C₁-C₁₂-Alkylen, C₄-C₈-Alkenylen oder Phenylethylen darstellt,
R₆ C₁-C₁₈-Alkyl, C₅-C₁₂-Cycloalkyl, unsubstituiertes oder durch C₁-C₄-Alkyl substituiertes Phenyl; C₇-C₉-Phenylalkyl oder -(CH₂)ᵣCOOR₇ bedeutet,
R₇ C₁-C₁₈-Alkyl, C₅-C₁₂-Cycloalkyl, unsubstituiertes oder durch C₁-C₄-Alkyl substituiertes Phenyl; oder C₇-C₉-Phenylalkyl darstellt,
R₈ C₁-C₁₈-Alkyl, unsubstituiertes oder durch C₁-C₄-Alkyl substituiertes Phenyl; C₇-C₉-Phenylalkyl, C₁-C₁₈-Alkanoyl, C₃-C₁₈-Alkenoyl, durch Sauerstoff, Schwefel oder 〉N-R₉ unterbrochenes C₂-C₁₈-Alkanoyl; C₆-C₉-Cycloalkylcarbonyl, unsubstituiertes oder durch C₁-C₄-Alkyl substituiertes Benzoyl bedeutet,
R₉ Wasserstoff oder C₁-C₄-Alkyl darstellt und
n eine ganze Zahl von 2 bis 40 bedeutet.

3. Oligomere Verbindungen gemäss Anspruch 1, worin R₅ Ethylen oder Propylen ist.

4. Oligomere Verbindungen gemäss Anspruch 1, worin,
R₁ und R₂ unabhängig voneinander Wasserstoff oder C₁-C₄-Alkyl bedeuten, und
R₅ Ethylen oder Propylen ist.

5. Oligomere Verbindungen gemäss Anspruch 1, worin,
R₁ und R₂ unabhängig voneinander Wasserstoff, C₁-C₁₂-Alkyl, C₂-C₁₂-Alkenyl, Cyclohexyl, Phenyl oder Cyclohexenyl darstellen,
R₄ Wasserstoff, C₁-C₁₂-Alkyl, C₂-C₁₂-Alkenyl, Cyclohexyl, Phenyl, Cyclohexenyl, Benzyl, -CH₂-S-R₆, -(CH₂)ₚCOOR₇ oder -(CH₂)_{q}OR₈ bedeutet,
R₅ C₁-C₈-Alkylen oder Phenylethylen darstellt,
R₆ C₁-C₁₂-Alkyl, C₅-C₈-Cycloalkyl, Phenyl, Benzyl oder -(CH₂)ᵣCOOR₇ bedeutet,
R₇ C₁-C₁₂-Alkyl, C₅-C₈-Cycloalkyl, Phenyl oder Benzyl darstellt,
R₈ C₁-C₁₂-Alkyl, Phenyl, Benzyl, C₁-C₁₂-Alkanoyl, durch Sauerstoff unterbrochenes C₂-C₁₂-Alkanoyl; Cyclohexylcarbonyl oder Benzoyl bedeutet,
n eine ganze Zahl von 2 bis 30 darstellt,
p 2 ist,
q eine ganze Zahl von 3 bis 6 bedeutet und
r 1 darstellt.

6. Oligomere Verbindungen gemäss Anspruch 1, worin
R₁ und R₂ unabhängig voneinander Wasserstoff, C₁-C₈-Alkyl, Cyclohexyl oder Phenyl darstellen,
R₄ Wasserstoff, C₁-C₈-Alkyl, Cyclohexyl oder (CH₂)ₚCOOR₇ bedeutet,
R₅ Ethylen, Propylen oder Phenylethylen darstellt,
R₇ C₁-C₁₂-Alkyl oder Benzyl bedeutet,
n eine ganze Zahl von 2 bis 20 darstellt und
p 2 ist.

7. Oligomere Verbindungen gemäss Anspruch 1, worin
R₁ und R₂ unabhängig voneinander Wasserstoff oder C₁-C₄-Alkyl bedeuten,
R₃ Wasserstoff ist,
R₄ Wasserstoff, C₁-C₄-Alkyl oder -(CH₂)ₚCOOR₇ darstellt,
R₅ Ethylen oder Propylen ist,
R₇ C₁-C₄-Alkyl bedeutet,
n eine ganze Zahl von 2 bis 10 darstellt und
p 2 bedeutet.

8. Zusammensetzung enthaltend
a) ein dem oxidativen, thermischen oder lichtinduzierten Abbau unterworfenes organisches Material und
b) mindestens eine oligomere Verbindung der Formel I gemäss Anspruch 1.

9. Zusammensetzung gemäss Anspruch 8, enthaltend neben den Komponenten (a) und (b) zusätzlich weitere Additive.

10. Zusammensetzung gemäss Anspruch 9, enthaltend als weitere Additive phenolische Antioxidantien, Lichtschutzmittel oder Verarbeitungsstabilisatoren.

11. Zusammensetzung gemäss Anspruch 9, enthaltend als weiteres Additiv mindestens eine Verbindung vom Typ der Benzofuran-2-one.

12. Zusammensetzung gemäss Anspruch 8, enthaltend als Komponente a) natürliche, halbsynthetische oder synthetische Polymere.

13. Zusammensetzung gemäss Anspruch 8, enthaltend als Komponente (a) thermoplastische Polymere.

14. Zusammensetzung gemäss Anspruch 8, enthaltend als Komponente (a) ein Polyolefin.

15. Zusammensetzung gemäss Anspruch 8, enthaltend als Komponente (a) Polyethylen oder Polypropylen.

16. Verwendung der oligomeren Verbindungen der in Anspruch 1 definierten Formel I als Stabilisatoren für organische Materialien gegen oxidativen, thermischen oder lichtinduzierten Abbau.

17. Verwendung gemäß Anspruch 16 als Verarbeitungsstabilisatoren (Thermostabilisatoren) in thermoplastischen Polymeren.

18. Verfahren zum Stabilisieren eines organischen Materials gegen oxidativen, thermischen oder lichtinduzierten Abbau, dadurch gekennzeichnet, dass man diesem mindestens eine oligomere Verbindung der in Anspruch 1 definierten Formel I einverleibt oder auf dieses aufbringt.

19. Oligomere Produkte, erhältlich durch Umsetzung einer Verbindung der Formel II oder eines Gemisches von Verbindungen der Formel II, mit einer Verbindung der Formel m oder einem Gemisch von Verbindungen der Formel III, 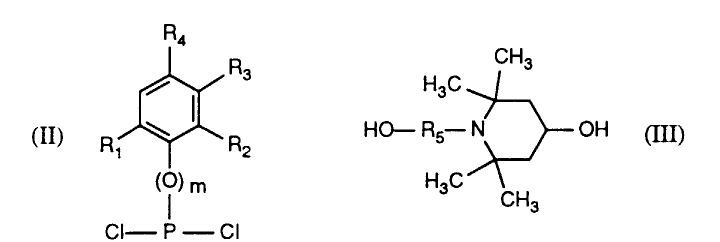 wobei die Reste R₁, R₂, R₃, R₄ und R₅ sowie die Ziffer m wie in Anspruch 1 definiert sind.

## Claims

1. An oligomeric compound of formula I 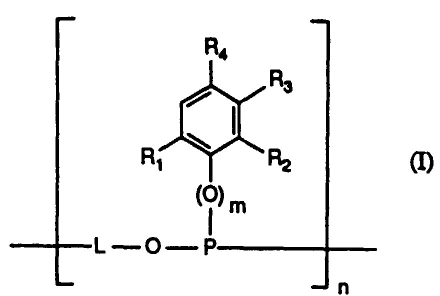 in which L is a group of formula 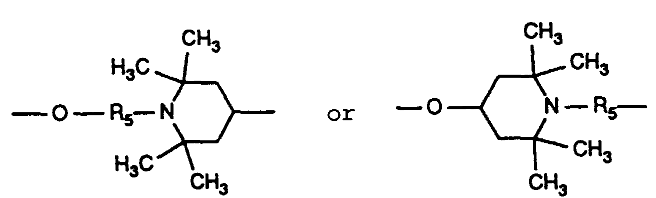 where the oxygen in the group L is attached in each case to the phosphorus in the structural repeating unit and the radical R₅ or the carbon in position 4 of the piperidinyl ring in the group L is attached in each case to the oxygen in the structural repeating unit;
R₁ and R₂ each independently of the other are hydrogen, C₁-C₂₅alkyl, C₂-C₂₄alkenyl, unsubstituted or C₁-C₄alkyl- substituted C₅-C₈cycloalkyl, unsubstituted or C₁-C₄alkyl- substituted phenyl, unsubstituted or C₁-C₄alkyl- substituted C₅-C₈cycloalkenyl; C₇-C₉phenylalkyl or -CH₂-S-R₆,
R₃ is hydrogen or methyl,
R₄ is hydrogen, C₁-C₂₅alkyl, C₂-C₂₄alkenyl, unsubstituted or C₁-C₄alkyl-substituted C₅-C₈cycloalkyl, unsubstituted or C₁-C₄alkyl-substituted phenyl, unsubstituted or C₁-C₄alkyl-substituted C₅-C₈cycloalkenyl; C₇-C₉phenylalkyl, -CH₂-S-R₆, -(CH₂)ₚCOOR₇ or -(CH₂)_{q}OR₈,
R₅ is C₁-C₁₈alkylene, C₂-C₁₈alkylene which is interrupted by oxygen, sulfur or 〉N-R₉ ; C₄-C₈alkenylene or phenylethylene,
R₆ is C₁-C₁₈alkyl, unsubstituted or C₁-C₄alkyl- substituted C₅-C₁₂cycloalkyl, unsubstituted or C₁-C₄-alkyl-substituted phenyl; C₇-C₉phenylalkyl or -(CH₂)ᵣCOOR₇,
R₇ is C₁-C₁₈alkyl, unsubstituted or C₁-C₄alkyl- substituted C₅-C₁₂cycloalkyl, unsubstituted or C₁-C₄-alkyl-substituted phenyl; or C₇-C₉phenylalkyl,
R₈ is C₁-C₂₅alkyl, unsubstituted or C₁-C₄alkyl- substituted phenyl; C₇-C₉phenylalkyl, C₁-C₂₅alkanoyl, C₃-C₂₅alkenoyl, C₂-C₂₅alkanoyl which is interrupted by oxygen, sulfur or 〉N-R₉ ; C₆-C₉cycloalkylcarbonyl, unsubstituted or C₁-C₁₂alkyl-substituted benzoyl; thenoyl or furoyl,
R₉ is hydrogen or C₁-C₈alkyl,
m is 0 or 1,
n is an integer from 2 to 50,
p is 0, 1 or 2,
q is an integer from 3 to 8, and
r is 1 or 2, with the proviso that, in the structural repeating units of formula I, the radicals L, R₁, R₂, R₃, R₄, R₅, R₆, R₇, R₈ and R₉ and also the indices m, p, q and r are identical or different.

2. An oligomeric compound according to claim 1, in which
R₁ and R₂ each independently of the other are hydrogen, C₁-C₁₈alkyl, C₂-C₁₈alkenyl, C₅-C₈cycloalkyl, unsubstituted or C₁-C₄alkyl-substituted phenyl; C₅-C₈cycloalkenyl, C₇-C₉phenylalkyl or -CH₂-S-R₆,
R₄ is hydrogen, C₁-C₁₈alkyl, C₂-C₁₈alkenyl, C₅-C₈-cycloalkyl, unsubstituted or C₁-C₄alkyl-substituted phenyl; C₅-C₈cycloalkenyl, C₇-C₉phenylalkyl, -CH₂-S-R₆, -(CH₂)ₚCOOR₇ or -(CH₂)_{q}OR₈,
R₅ is C₁-C₁₂alkylene, C₄-C₈alkenylene or phenylethylene,
R₆ is C₁-C₁₈alkyl, C₅-C₁₂cycloalkyl, unsubstituted or C₁-C₄alkyl-substituted phenyl; C₇-C₉phenylalkyl or -(CH₂)ᵣCOOR₇
R₇ is C₁-C₁₈alkyl, C₅-C₁₂cycloalkyl, unsubstituted or C₁-C₄alkyl-substituted phenyl; or C₇-C₉phenylalkyl,
R₈ is C₁-C₁₈alkyl, unsubstituted or C₁-C₄alkyl- substituted phenyl; C₇-C₉phenylalkyl, C₁-C₁₈alkanoyl, C₃-C₁₈alkenoyl, C₂-C₁₈alkanoyl which is interrupted by oxygen, sulfur or 〉N-R₉ ; C₆-C₉cycloalkylcarbonyl, unsubstituted or C₁-C₄alkyl-substituted benzoyl,
R₉ is hydrogen or C₁-C₄alkyl, and
n is an integer from 2 to 40.

3. An oligomeric compound according to claim 1, in which R₅ is ethylene or propylene.

4. An oligomeric compound according to claim 1, in which R₁ and R₂ each independently of the other are hydrogen or C₁-C₄alkyl, and R₅ is ethylene or propylene.

5. An oligomeric compound according to claim 1, in which
R₁ and R₂ each independently of the other are hydrogen, C₁-C₁₂alkyl, C₂-C₁₂alkenyl, cyclohexyl, phenyl or cyclohexenyl,
R₄ is hydrogen, C₁-C₁₂alkyl, C₂-C₁₂alkenyl, cyclohexyl, phenyl, cyclohexenyl, benzyl, -CH₂-S-R₆, -(CH₂)ₚCOOR₇ or -(CH₂)_{q}OR₈,
R₅ is C₁-C₈alkylene or phenylethylene,
R₆ is C₁-C₁₂alkyl, C₅-C₈cycloalkyl, phenyl, benzyl or -(CH₂)ᵣCOOR₇,
R₇ is C₁-C₁₂alkyl, C₅-C₈cycloalkyl, phenyl or benzyl,
R₈ is C₁-C₁₂alkyl, phenyl, benzyl, C₁-C₄alkanoyl, C₁-C₁₂alkanoyl, C₂-C₁₂alkanoyl which is interrupted by oxygen; cycloalkylcarbonyl or benzoyl,
n is an integer from 2 to 30,
p is 2,
q is an integer from 3 to 6, and
r is 1.

6. An oligomeric compound according to claim 1, in which
R₁ and R₂ each independently of the other are hydrogen, C₁-C₈alkyl, cyclohexyl or phenyl,
R₄ is hydrogen, C₁-C₈alkyl, cyclohexyl or -(CH₂)ₚCOOR₇,
R₅ is ethylene, propylene or phenylethylene,
R₇ is C₁-C₁₂alkyl or benzyl,
n is an integer from 2 to 20, and
p is 2.

7. An oligomeric compound according to claim 1, in which
R₁ and R₂ each independently of the other are hydrogen, or C₁-C₄alkyl,
R₃ is hydrogen,
R₄ is hydrogen, C₁-C₄alkyl, or -(CH₂)ₚCOOR₇,
R₅ is ethylene, or propylene
R₇ is C₁-C₄alkyl,
n is an integer from 2 to 10, and
p is 2.

8. A composition comprising
a) an organic material which is subject to oxidative, thermal or light-induced degradation, and
b) at least one oligomeric compound of formula I according to claim 1.

9. A composition according to claim 8, comprising further additives in addition to components (a) and (b).

10. A composition according to claim 9, comprising as further additives phenolic antioxidants, light stabilisers or processing stabilisers.

11. A composition according to claim 9, comprising at least one compound of the benzofuran-2-one type as further additive.

12. A composition according to claim 8, comprising as component a) a natural, semi-synthetic or synthetic polymer.

13. A composition according to claim 8, comprising as component a) a thermoplastic polymer.

14. A composition according to claim 8, comprising as component a) a polyolefin.

15. A composition according to claim 8, comprising as component a) polyethylene or polypropylene.

16. The use of an oligomeric compound of formula I as defined in claim 1 as a stabiliser for organic materials against oxidative, thermal or light-induced degradation.

17. The use according to claim 16 as a processing stabiliser (heat stabiliser) in thermoplastic polymers.

18. A method of stabilising organic material against oxidative, thermal or light-induced degradation, which comprises incorporating in, or applying to, said material at least one oligomeric compound of formula I as defined in claim 1.

19. An oligomeric product obtainable by reacting a compound of formula II or a mixture of compounds of formula II with a compound of formula III or a mixture of compounds of formula III 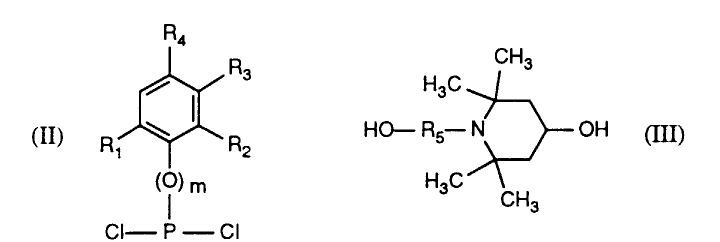 in which the radicals R₁, R₂, R₃, R₄, and R₅ and the index m are as defined in claim 1.

## Revendications

1. Composés oligomères de formule I 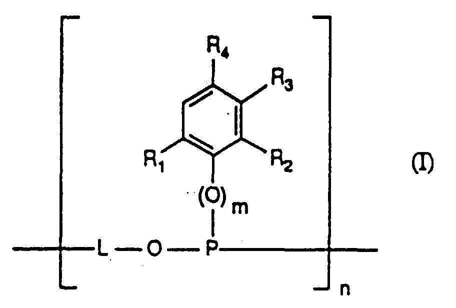 dans laquelle L représente un groupe de formule 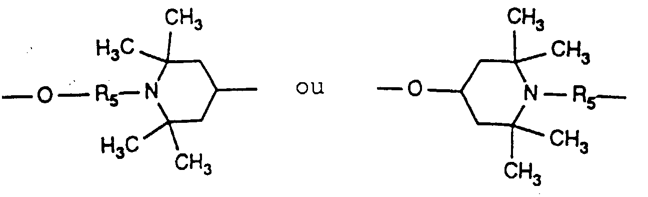 dans laquelle l'atome d'oxygène dans le groupe L est respectivement lié à l'atome de phosphore dans le motif de structure de répétition et le groupe R₅ par exemple à l'atome de carbone en position 4 du cycle pipéridinyle dans le groupe L, respectivement à l'atome d'oxygène dans le motif de structure de répétition;
R₁ et R₂ représentent indépendamment l'un de l'autre un atome d'hydrogène, un groupe alkyle en C₁-C₂₅, alcényle en C₂-C₂₄, cycloalkyle en C₅-C₈ non substitué ou substitué par un groupe alkyle en C₁-C₄, phényle non substitué ou substitué par un groupe alkyle en C₁-C₄, cycloalcényle en C₅-C₈ non substitué ou substitué par un groupe alkyle en C₁-C₄; phénylalkyle en C₇-C₉ ou -CH₂-S-R₆,
R₃ représente un atome d'hydrogène ou un groupe méthyle,
R₄ représente un atome d'hydrogène, un groupe alkyle en C₁-C₂₅, alcényle en C₂-C₂₄, cycloalkyle en C₅-C₈ non substitué ou substitué par un groupe alkyle en C₁-C₄, phényle non substitué ou substitué par un groupe alkyle en C₁-C₄, cycloalcényle en C₅-C₈ non substitué ou substitué par un groupe alkyle en C₁-C₄; phénylalkyle en C₇-C₉, -CH₂-S-R₆, -(CH₂)ₚCOOR₇ ou -(CH₂)_{q}OR₈,
R₅ représente un groupe alkylène en C₁-C₁₈, alkylène en C₂-C₁₈ interrompu par un atome d'oxygène, de soufre ou 〉N-R₉;
R₆ représente un groupe alkyle en C₁-C₁₈, cycloalkyle en C₅-C₁₂ non substitué ou substitué par un groupe alkyle en C₁-C₄, phényle non substitué ou substitué par un groupe alkyle en C₁-C₄, phénylalkyle en C₇-C₉ ou -(CH₂)ᵣCOOR₇,
R₇ représente un groupe alkyle en C₁-C₁₈, cycloalkyle en C₅-C₁₂ non substitué ou substitué par un groupe alkyle en C₁-C₄, phényle non substitué ou substitué par un groupe alkyle en C₁-C₄; ou phénylalkyle en C₇-C₉,
R₈ représente un groupe alkyle en C₁-C₂₅ ou phényle non substitué ou substitué par un groupe alkyle en C₁-C₄,; phénylalkyle en C₇-C₉, alcanoyle en C₁-C₂₅, alcénoyle en C₃-C₂₅, alcanoyle en C₂-C₂₅ interrompu par un atome d'oxygène, de soufre ou 〉N-R₉; cycloalkylcarbonyle en C₆-C₉, benzoyle non substitué ou substitué par un groupe alkyle en C₁-C₁₂; thénoyle ou furoyle,
R₈ représente un atome d'hydrogène ou un groupe alkyle en C₁-C₈,
m est 0 ou 1,
n représente un nombre entier de 2 à 50,
p est 0, 1 ou 2,
q représente un nombre entier de 3 à 8 et
r représente 1 ou 2, les groupes L, R₁, R₂, R₃, R₄, R₅, R₆, R₇, R₈ et R₉ ainsi que les nombres m, p, q et r dans les motifs de structure de répétition de formule I étant identiques ou différents.

2. Composés oligomères selon la revendication 1, dans lesquels
R₁ et R₂ représentent indépendamment l'un de l'autre un atome d'hydrogène, un groupe alkyle en C₁-C₁₈, alcényle en C₂-C₁₈, cycloalkyle en C₅-C₈, phényle non substitué ou substitué par un groupe alkyle en C₁-C₄, cycloalcényle en C₅-C₈, phénylalkyle en C₇-C₉ ou -CH₂-S-R₆,
R₄ représente un atome d'hydrogène, un groupe alkyle en C₁-C₁₈, alcényle en C₂-C₁₈, cycloalkyle en C₅-C₈, phényle non substitué ou substitué par un groupe alkyle en C₁-C₄, cycloalcényle en C₅-C₈, phénylalkyle en C₇-C₉, -CH₂-S-R₆, -(CH₂)ₚCOOR₇ ou -(CH₂)_{q}OR₈,
R₅ représente un groupe alkylène en C₁-C₁₂, alcénylène en C₄-C₈ ou phényléthylène,
R₆ représente un groupe alkyle en C₁-C₁₈, cycloalkyle en C₅-C₁₂, phényle non substitué ou substitué par un groupe alkyle en C₁-C₄, phénylalkyle en C₇-C₉ ou -(CH₂)ᵣCOOR₇,
R₇ représente un groupe alkyle en C₁-C₁₈, cycloalkyle en C₅-C₁₂, phényle non substitué ou substitué par un groupe alkyle en C₁-C₄; ou phénylalkyle en C₇-C₉,
R₈ représente un groupe alkyle en C₁-C₁₈, phényle non substitué ou substitué par un groupe alkyle en C₁-C₄; phénylalkyle en C₇-C₉, alcanoyle en C₁-C₁₈, alcénoyle en C₃-C₁₈, alcanoyle en C₂-C₂₅ interrompu par un atome d'oxygène, de soufre ou 〉N-R₉; cycloalkylcarbonyle en C₆-C₉, benzoyle non substitué ou substitué par un groupe alkyle en C₁-C₄,
R₈ représente un atome d'hydrogène ou un groupe alkyle en C₁-C₄,
n représente un nombre entier de 2 à 40.

3. Composés oligomères selon la revendication 1, dans lesquels R₅ est un groupe éthylène ou propylène.

4. Composés oligomères selon la revendication 1, dans lesquels
R₁ et R₂ représentent indépendamment l'un de l'autre un atome d'hydrogène ou un groupe alkyle en C₁-C₄, et R₅ est un groupe éthylène ou propylène.

5. Composés oligomères selon la revendication 1, dans lesquels
R₁ et R₂ représentent indépendamment l'un de l'autre un atome d'hydrogène, un groupe alkyle en C₁-C₁₂, alcényle en C₂-C₁₂, cyclohexyle, phényle ou cyclohexényle,
R₄ représente un atome d'hydrogène, un groupe alkyle en C₁-C₁₂, alcényle en C₂-C₁₂, cyclohexyle, phényle, cyclohexényle, benzyle, -CH₂-S-R₆, -(CH₂)ₚCOOR₇ ou -(CH₂)_{q}OR₈,
R₅ représente un groupe alkylène en C₁-C₈ ou phényléthylène,
R₆ représente un groupe alkyle en C₁-C₁₂, cycloalkyle en C₅-C₈, phényle, benzyle ou -(CH₂)ᵣ-COOR₇,
R₇ représente un groupe alkyle en C₁-C₁₂, cycloalkyle en C₅-C₈, phényle ou benzyle,
R₈ représente un groupe alkyle en C₁-C₁₂, phényle, benzyle, alcanoyle en C₁-C₁₂, alcanoyle en C₁-C₁₂ interrompu par des atomes d'oxygène; cyclohexylcarbonyle ou benzoyle,
n représente un nombre entier de 2 à 30,
p est 2,
q représente un nombre entier de 3 à 6 et
r représente 1.

6. Composés oligomères selon la formule I, dans laquelle
R₁ et R₂ représentent indépendamment l'un de l'autre un atome d'hydrogène, un groupe alkyle en C₁-C₈, cyclohexyle ou phényle,
R₄ représente un atome d'hydrogène, un groupe alkyle en C₁-C₈, cyclohexyle -(CH₂)ₚCOOR₇,
R₅ représente un groupe éthylène, propylène ou phényléthylène,
R₇ représente un groupe alkyle en C₁-C₁₂ ou benzyle,
n représente un nombre entier de 2 à 20,
p est 2.

7. Composés oligomères selon la formule I, dans laquelle
R₁ et R₂ représentent indépendamment l'un de l'autre un atome d'hydrogène, ou un groupe alkyle en C₁-C₄,
R₃ est un atome d'hydrogène,
R₄ représente un atome d'hydrogène, un groupe alkyle en C₁-C₄ ou -(CH₂)ₚCOOR₇,
R₅ représente un groupe éthylène ou propylène,
R₇ représente un groupe alkyle en C₁-C₄,
n représente un nombre entier de 2 à 10,
p représente 2.

8. Composition contenant
(a) un matériau organique sujet à une dégradation par oxydation, thermique ou induite par la lumière et
(b) au moins un composé oligomère de formule I selon la revendication 1.

9. Composition selon la revendication 8, contenant en plus des composants (a) et (b), d'autres additifs.

10. Composition selon la revendication 9, contenant comme autres additifs des antioxydants, des agents de protection contre la lumière ou des stabilisants de transformation de type phénolique.

11. Composition selon la revendication 9, contenant comme autre additif au moins un composé du type de la benzofuran-2-one.

12. Composition selon la revendication 8, contenant comme composant (a) des polymères naturels, semi-synthétiques ou synthétiques.

13. Composition selon la revendication 8, contenant comme composant (a) des polymères thermoplastiques.

14. Composition selon la revendication 8, contenant comme composant (a) une polyoléfine.

15. Composition selon la revendication 8, contenant comme composant (a) du polyéthylène ou du polypropylène.

16. Utilisation des composés oligomères de formule I définie à la revendication 1 comme stabilisants pour des matériaux organiques contre la dégradation due à l'oxydation, thermique ou induite par la lumière.

17. Utilisation selon la revendication 16 comme stabilisants de transformation (stabilisants thermiques) dans des polymères thermoplastiques.

18. Procédé de stabilisation d'un matériau organique contre la dégradation due à l'oxydation, thermique ou induite par la lumière, caractérisé en ce qu'on incorpore ou on applique à celui-ci au moins un composé oligomère de formule I.

19. Composés oligomères, qu'on peut obtenir en mettant à réagir un composé de formule II ou un mélange de composés de formule II, avec un composé de formule III ou un mélange de composés de formule III, 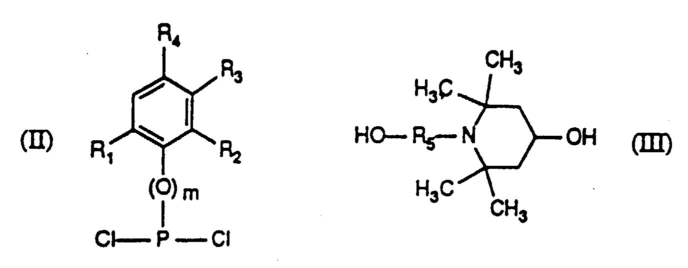 dans laquelle les groupes R₁, R₂, R₃, R₄ et R₅ ainsi que les nombres m sont tels que définis à la revendication 1.
